(19) **Europäisches Patentamt European Patent Office Office européen des brevets**

(11) **EP 4 654 090 A1**

(12) **EUROPEAN PATENT APPLICATION**

(43) Date of publication:
26.11.2025 Bulletin 2025/48

(21) Application number: 24305826.0

(22) Date of filing: 24.05.2024

(51) International Patent Classification (IPC):
$G06N\ 10/40^{(2022.01)}$        $G06N\ 10/70^{(2022.01)}$

(52) Cooperative Patent Classification (CPC):
G06N 10/70; G06N 10/20; G06N 10/40

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicants:
• Université de Strasbourg
67000 Strasbourg (FR)

• Centre National de la Recherche Scientifique
75016 Paris (FR)

(72) Inventors:
• PUPILLO, Guido
67100 Strasbourg (FR)
• JANDURA, Sven
67000 Strasbourg (FR)

(74) Representative: Lavoix
2, place d'Estienne d'Orves
75441 Paris Cedex 09 (FR)

(54) **MEASUREMENT CIRCUIT OF A STABILIZER OF A QUANTUM ERROR CORRECTION CODE FOR LOGICAL QUBITS AND ASSOCIATED METHOD**

(57)    The present invention relates to a measurement circuit (16) of a stabilizer of a quantum error correction code for logical qubits, each logical qubit comprising one or several qubits being encoded in neutral atoms with interactions mediated by Rydberg states, the stabilizer being measured on one ancilla qubit and several data qubits, the measurement circuit (16) comprising, for each data qubit, a device (18) comprising a coupling unit (20) adapted to apply a laser pulse symmetrically on both the data qubit and the ancilla qubit, the laser pulse having an amplitude and a phase chosen to have a probability of occurrence of the Rydberg hopping inferior to 0.4 when both qubits are excited by said laser pulse.

FIG.6

**Description**

**TECHNICAL FIELD OF THE INVENTION**

The present invention concerns a measurement circuit of a stabilizer of a quantum error correction code for logical qubits. The present invention also concerns an associated method for measuring a stabilizer of a quantum surface code.

**BACKGROUND OF THE INVENTION**

Quantum error correction (QEC) exploits redundancy to encode a logical qubit with an arbitrarily low error rate into several noisy physical qubits, which is possible as long as the physical error rate is below a given threshold. In surface codes, near faultless logical qubits are prepared and maintained by repeated measurement of so-called stabilizer operators on the physical qubits. In this way, up to $\lfloor d/2 \rfloor$ physical single qubit errors in d rounds of stabilizer measurements can always be corrected, where d is the so-called distance of the code.

Recently, several quantum computing platforms have surpassed the threshold for QEC by minimizing noise at the level of single- and two-qubit gates. In neutral atom quantum computers, two-qubit operations implemented by laser-exciting electrons to strongly interacting Rydberg states using time-optimal (TO) control methods have recently surpassed gate fidelities $\mathcal{F}$ ~99.5%. These fidelities are above the threshold for QEC with surface- or color-codes, and logical qubits and small logical circuits have been experimentally realized.

The neutral atom platform comes with unique opportunities, including native implementations of multi-qubit gates on three or more atoms, and the possibility of trapping different atomic species with different native intra- and inter-species interactions. Specific errors include the finite lifetime of Rydberg states due to spontaneous emission and the possibility of so-called Rydberg leakage errors, where an atom is erroneously left in the Rydberg state at the end of a gate. Rydberg leakage errors are particularly detrimental, since an error on a single qubit can prevent the execution of two-qubit gates on all of its neighbors, via the Rydberg blockade mechanism.

It is a key open question how to perform stabilizer measurements that minimize logical error rates under realistic noise models in these quantum computers.

One known protocol is the $\pi$-$2\pi$-$\pi$ protocol developed in an article by D. Jaksch, J. I. Cirac, P. Zoller, S. L. Rolston, R. Côté, and M. D. Lukin, entitled "Fast Quantum Gates for Neutral Atoms", Physical Review Letters 85, 2208 (2000). This article will be referred hereinafter as Jaksch et al. This protocol provides with relatively satisfying performance for logical error rate.

However, this protocol is asymmetrical, since it requires two different laser pulses for exciting the data qubit on the one hand and the ancilla qubit on the other hand. This renders the physical implementation of such protocol cumbersome in practice.

**SUMMARY OF THE INVENTION**

There is therefore a need for a measurement circuit of a stabilizer of a quantum error correction code for logical qubits using a symmetrical protocol providing with similar performance to the $\pi$-$2\pi$-$\pi$ protocol described in Jaksch et al.

To this end, the specification describesa measurement circuit of a stabilizer of a quantum error correction code for logical qubits, each logical qubit comprising one or several qubits being encoded in neutral atoms with interactions mediated by Rydberg states, the stabilizer being measured on one ancilla qubit and several data qubits, the measurement circuit comprising, for each data qubit, a device comprising a coupling unit adapted to apply a laser pulse symmetrically on both the data qubit and the ancilla qubit, the laser pulse having an amplitude and a phase chosen to have a probability of occurrence of the Rydberg hopping inferior to 0.4 when both qubits are excited by said laser pulse.

According to further aspects of the device, which are advantageous but not compulsory, the measurement circuit might incorporate one or several of the following features, taken in any technically admissible combination:

- the amplitude and the phase of the laser pulse are chosen to have a probability of occurrence of the Rydberg hopping inferior to 0.1 when both qubits are excited by said laser pulse.
- the value of the derivative of the phase of said laser pulse with time at the beginning is different from 0.
- the difference between a maximum value of the phase of said laser pulse and an initial value of the phase of said laser pulse is superior to 3 rad.
- the phase of said laser pulse has two extremum values different from an initial value of the phase.
- the phase of said laser pulse has two extremum values, both extremum values being strictly superior to an initial value of the phase.

- the amplitude varies according to a pulse of duration of $\dfrac{9.50}{\Omega}$, where $\Omega$ is the Rabi frequency of the laser pulse.

- the amplitude varies according to a pulse of duration comprised between $\dfrac{3\pi}{\Omega}$ and $\dfrac{4\pi}{\Omega}$ where $\Omega$ is the Rabi frequency of the laser pulse.

- the amplitude varies according to a pulse of duration comprised between $\dfrac{3\pi}{\Omega}$ and $\dfrac{4\pi}{\Omega}$ where $\Omega$ is the Rabi frequency of the laser pulse.

- the amplitude and the phase of the laser pulse are chosen to have two of values c1, c2, c3 and c4 equal to 0, with:

$$c_1 = \frac{e^{-2i\theta} - e^{-3i\theta}\sin(\theta)}{2}$$

$$c_2 = \frac{e^{-2i\theta} + e^{-3i\theta}\sin(\theta)}{2}$$

$$c_3 = \frac{e^{-3i\theta}\cos(\theta)}{2}$$

$$c_4 = -\frac{e^{-3i\theta}\cos(\theta)}{2}$$

Where $\theta$ is the phase acquired by the state |01> under the laser pulse.

- the amplitude and the phase of the laser pulse are chosen to have three values among the values c1, c2, c3 and c4 equal to 0.

- the amplitude and the phase of the laser pulse are chosen to have $\theta = \dfrac{\pi}{2}$.

- the laser pulse is shaped by a unique acousto-optic modulator to have the desired amplitude and phase.

- each qubit are encoded in two species of atoms.

The present description also concerns a system implementing a quantum error correction code comprising several measurement circuits as previously described.

The term "adapted to" used here should be understood as meaning "able to" or "configured to".

**BRIEF DESCRIPTION OF THE DRAWINGS**

The invention will be better understood on the basis of the following description which is given in correspondence with the annexed figures and as an illustrative example, without restricting the object of the invention. In the annexed figures:

- figure 1 is a schematic representation of a surface code,
- figure 2 is a three-level scheme for the qubits on which the surface code of figure 1 is applied,
- figure 3 is a schematic representation of error propagation in a stabilizer, figure 3 schematically representing four different ways how a $|r\rangle\langle 1|$ error can propagate through a $V_{CZ}$ gate. The projectors $\Pi$ restrict the state before the $|r\rangle\langle 1|$ error to the computational subspace.
- figure 4 is another schematic representation of error propagation in a stabilizer, figure 4 illustrating three possible ways how a $|r\rangle\langle 1|$ error on the ancilla qubit after the first gate (first row) can spread. The n-th row shows error after n $V_{CZ}$ gates.
- figure 5 illustrates the temporal variation of the amplitude and the phase of a laser pulse applied in the claimed protocol (middle graphs) compared to two prior art protocol (graphs in the upper part and in the down part),
- figure 6 illustrates a measurement circuit of one stabilizer of the surface code of figure 1, and

- figures 7 to 18 are figures relative to the numerical simulations carried out by the Applicant.

## DETAILED DESCRIPTION OF THE PREFERRED EMBODIMENTS

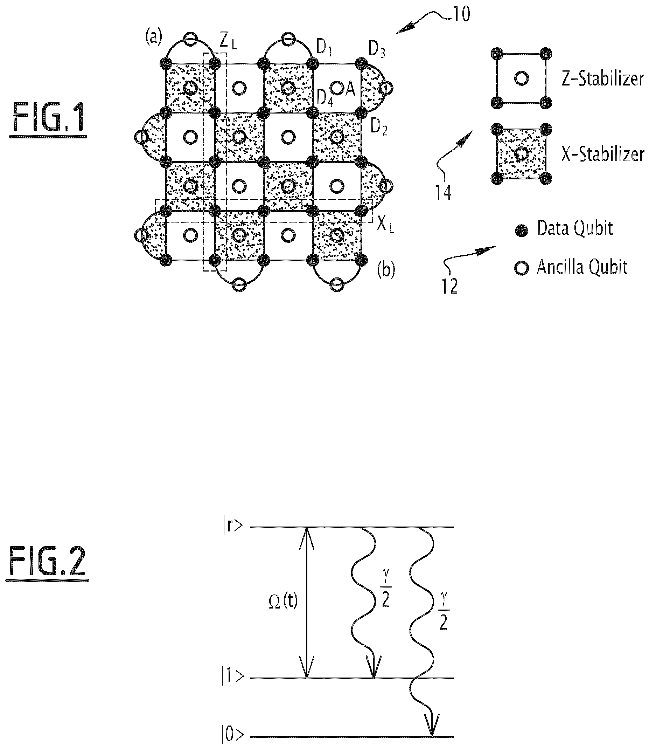

A system implementing a surface code 10 for logical qubits is schematically represented on figure 1.

A surface code is a geometrically local stabilizer quantum error correction code, in which qubits are arranged on a square lattice and stabilizers are given by Pauli operators on the plaquettes of this lattice.

For more information relative to surface code, the reader may refer to a paper by S. B. Bravyi et al. entitled "Quantum codes on a lattice with boundary" accessible on arXiv:quant-ph/9811052.

The surface code is applied on logical qubit, a logical qubit being a calculation entity comprising one or several qubits 12 (a qubit 12 is there a physical qubit).

The surface code 10 is a d=5 surface code comprising $d^2$ data qubits 12 represented in solid circles and $d^2$-1 ancilla qubits 12 represented in open circles.

The surface code 10 comprises several stabilizers 14, which are X-stabilizers 14 and Z-stabilizers 14.

The logical operators $X_L$ associated with X-stabilizers 14 consist of X operators along a row of data qubits whereas The logical operators $Z_L$ associated with Z-stabilizers 14 consist of Z operators along a column of data qubits.

According to the example of figure 1, each stabilizer 14 is measured on one ancilla qubit 12 and several data qubits 12.

In the present case, each stabilizer 14 is measured on one ancilla qubit 12 and four data qubits 12.

Each stabilizer 14 is achieved by a respective measurement circuit 16.

This means that the surface code 10 comprises several measurement circuits 16, each measurement circuit 16 being a measurement circuit of a respective stabilizer 14.

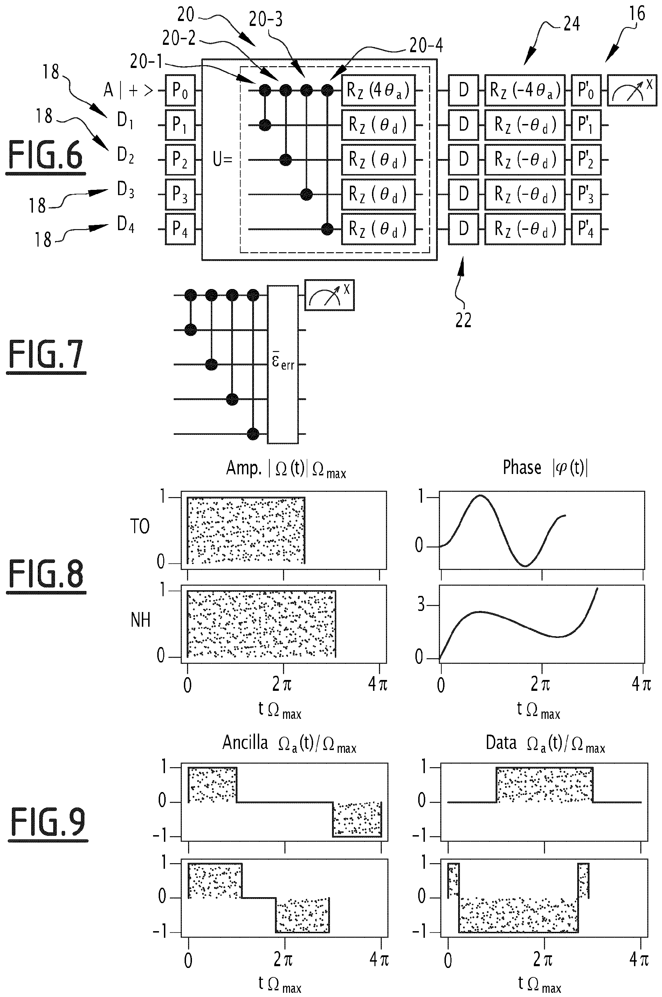

As schematically represented on figure 6, for each data qubit 12, each measurement circuit 16 comprises, a device 18 comprising a coupling unit 20 adapted to apply a laser pulse symmetrically on both the data qubit 12 and the ancilla qubit 12. This is represented schematically by a first unit 20_1 for the first data qubit 12 and the ancilla qubit 12, a second unit 20_2 for the second data qubit 12 and the ancilla qubit 12, a third unit 20_3 for the third data qubit 12 and the ancilla qubit 12 and a fourth unit 20_4 for the fourth data qubit 12 and the ancilla qubit 12.

By symmetrically in this context, it is meant that only one laser pulse is applied on the data qubit 12 and the ancilla qubit 12.

In practice, this means that the laser pulse is shaped by a unique acousto-optic modulator to have the desired amplitude and phase.

In an asymmetrical protocol, the laser pulse applied on the data qubit 12 and the ancilla qubit 12 is shaped by two different acousto-optic modulators. This implies the presence of a relatively complex electronic circuitry adapted to synchronize the two acousto-optic modulators and a complexification of the optical set-up so as to ensure the passing by two acousto-optic modulators instead of only one acousto-optic modulator.

Such difference can be seen at the level of the qubits by the fact that the optical excitations applied on the data qubit 12 and the ancilla qubit 12 are issued from the same shaping of one laser beam by the same acousto-optical modulator in a symmetrical protocol whereas the optical excitations applied on the data qubit 12 and the ancilla qubit 12 are issued from two independent shaping of one or two laser beam(s) by a respective acousto-optical modulator in an asymmetrical protocol.

The laser pulse is a specific laser pulse adapted to the specific qubits 12 considered in the present example.

In the present case, the qubits 12 are encoded in a quantum object.

A quantum object is an object whose dynamics cannot be described using classical physics, but instead can only accurately be described using the principles of quantum mechanics.

The quantum object are here neutral atoms, notably alkali or alkaline earth atoms, such as Rubidium.

In another embodiment, the neutral atoms are two species of atoms.

In such case, the two species are preferably two alkali or alkaline earth species.

In the present case, Rydberg states of the neutral atoms are used to mediate the interaction between the atoms.

As schematically represented on figure 6, each qubit 12 comprises a three eigenstates, respectively named state $|0\rangle$, state $|1\rangle$ and Rydberg state $|r\rangle$ hereinafter.

Hereinafter, each qubit 12 is modelled as a three level system with computational basis states $|0\rangle$ and $|1\rangle$ with energies (henceforth setting $\hbar$ = 1) $\omega_0$, $\omega_1$ and the Rydberg state $|r\rangle$ at energy $\omega_r$.

Rydberg state $|r\rangle$ has a finite lifetime, which is named $\dfrac{1}{\gamma}$ hereinafter.

As the Rydberg state $|r\rangle$ has equal probability to decay to the basis states $|0\rangle$ and $|1\rangle$, the decay rate towards one of these states $|0\rangle$ and $|1\rangle$ is $\dfrac{\gamma}{2}$.

As schematized on figure 2, the coupling unit 20 is adapted to couple the basis state $|1\rangle$ with the Rydberg state $|r\rangle$.

The coupling unit 20 couples these states with a time-dependent drive $\Omega(t)$.

The phase of the drive $\Omega(t)$ has a phase $\varphi(t)$ and an amplitude $|\Omega(t)| \leq \Omega_{max}$.

The device 18 further comprises a filtering unit 22 and a controlled-Z gate 24.

The filtering unit 22 is adapted to filter the qubits remaining in the Rydberg state at the end of the application of the laser pulses.

This filtering unit 22 is thus adapted to remove qubits in the Rydberg state.

This corresponds to apply on each atom the channel :

$$\mathcal{D}(\rho) = \Pi\rho\Pi + \langle r|\rho|r\rangle \frac{\Pi}{2}$$

With $\Pi = |0\rangle\langle 0| + |1\rangle\langle 1|$.

This filtering unit 22 is then adapted to implement an adapted removing operation, for instance, either by simply waiting long enough for the Rydberg state to decay with high probability, or by coupling the Rydberg state to a short lived intermediate state which decays to $|0\rangle$ and $|1\rangle$.

The controlled-Z gate 24 is adapted to apply a CZ gate on the resulting population after the filtering unit 22.

The present circuit measurement 16 has the specificity that the laser pulse is specifically adapted to limit Rydberg hopping between two qubits 12.

By definition, Rydberg hopping is a phenomenon corresponding to a hopping of the Rydberg state between two qubits, the first qubit transferring its excitation in the Rydberg state to the second qubit.

The first and the second qubits 12 are here a data qubit and an ancillary qubit. Formally, this corresponds to a $|r\rangle\langle 1|$ error.

The laser pulse is specifically shaped to have a probability of occurrence of the Rydberg hopping inferior to 0.4 when both qubits 12 are excited by said laser pulse.

Preferably, the laser pulse is specifically shaped to have a probability of occurrence of the Rydberg hopping inferior to 0.1 when both qubits are excited by said laser pulse.

By specifically shaped in this context, it is meant that at least one of the amplitude $|\Omega(t)|$ or the phase $\varphi(t)$ of the laser pulse is chosen so as to fulfill the probability criteria.

It should be understood that the at least one of the amplitude $|\Omega(t)|$ or the phase $\varphi(t)$ of the laser pulse is also further shaped to ensure a limitation of the error propagation.

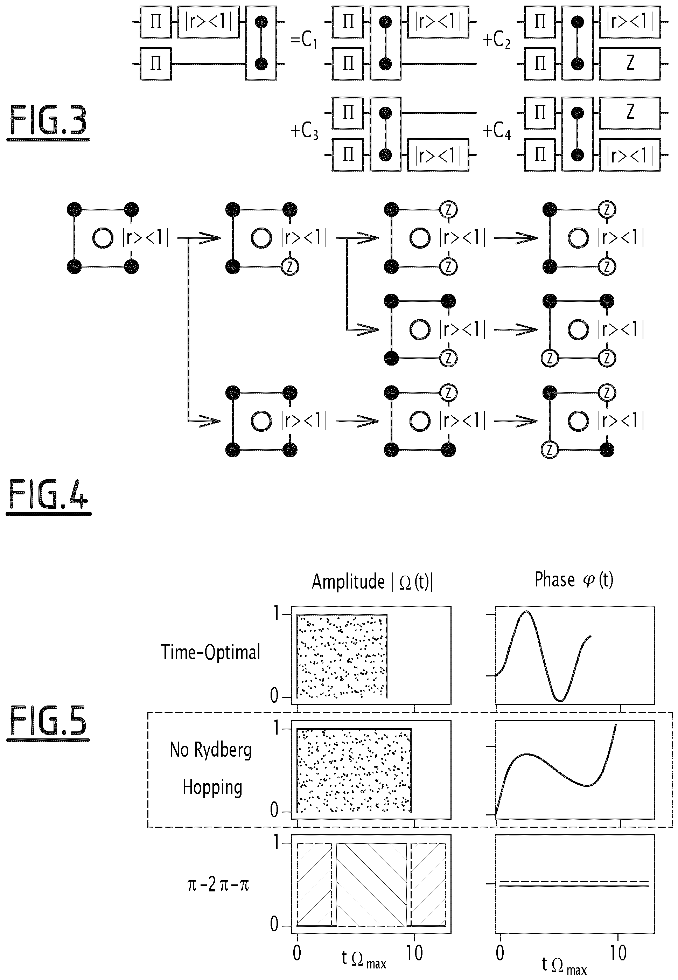

Figures 3 and 4 illustrates different way a $|r\rangle\langle 1|$ error can propagate in the CZ gate.

More specifically, figure 3 shows four different ways how a $|r\rangle\langle 1|$ error can propagate through a CZ gate.

Each of these different ways correspond to a respective coefficient $c_1$, $c_2$, $c_3$ and $c_4$.

As shown in the calculation section, these coefficients can be expressed as follows:

$$c_1 = \frac{e^{-2i\theta} - e^{-3i\theta}\sin(\theta)}{2}$$

$$c_2 = \frac{e^{-2i\theta} + e^{-3i\theta}\sin(\theta)}{2}$$

$$c_3 = \frac{e^{-3i\theta}\cos(\theta)}{2}$$

$$c_4 = -\frac{e^{-3i\theta}\cos(\theta)}{2}$$

Where $\theta$ is the phase acquired by the state |01> under the laser pulse. The state |01> is the state where one of the atoms (without loss of generality the first one) is in state |0>, and the other atom is in state |1>.

Such value is sometimes named single qubit phase.

The projectors $\Pi$ restrict the state before the $|r\rangle\langle 1|$ error to the computational subspace.

Figure 4 also illustrates three possible ways how a $|r\rangle\langle 1|$ error on the ancilla qubit after the first gate (first row) can spread. The n-th row shows error after n CZ gates.

Based on these error propagation schemes, the amplitude $|\Omega(t)|$ and the phase $\varphi(t)$ of the laser pulse are chosen to have two of values c1, c2, c3 and c4 equal to 0.

Preferably, the amplitude $|\Omega(t)|$ and the phase $\varphi(t)$ of the laser pulse are chosen to have three values among the values c1, c2, c3 and c4 equal to 0.

Advantageously, the amplitude $|\Omega(t)|$ and the phase $\varphi(t)$ of the laser pulse are chosen to have $\theta = \dfrac{\pi}{2}$ .

Such criteria can be combined with other ones, notably speed. More details can be found in the simulation section.

One resulting specific laser pulse is visible on figure 5 and is compared with other pulse shapes. Said pulse shapes are detailed in the simulation and calculation section.

Some properties of said laser pulse of figure 5 are highlighted hereinafter in so far as they are representative of laser pulses fulfilling the requirement of having a low Rydberg hopping probability.

A first property is that the value of the derivative of the phase $\varphi(t)$ of said laser pulse with time at the beginning is different from 0.

A second property is that the difference between a maximum value of the phase $\varphi(t)$ of said laser pulse and an initial value of the phase $\varphi(t)$ of said laser pulse is superior to 3 rad.

A third property is that the phase $\varphi(t)$ of said laser pulse has two extremum values different from an initial value of the phase $\varphi(t)$.

A fourth property is that the phase $\varphi(t)$ of said laser pulse has two extremum values, both extremum values being strictly superior to an initial value of the phase $\varphi(t)$.

A fifth property is that the amplitude $|\Omega(t)|$ varies according to a pulse of duration of 9 50 at least $\dfrac{9.50}{\Omega}$ , where $\Omega$ is the Rabi frequency of the laser pulse.

A sixth property is that the amplitude $|\Omega(t)|$ varies according to a pulse of duration comprised between $\dfrac{3\pi}{\Omega}$ and $\dfrac{4\pi}{\Omega}$ .

Each of said properties can be combined so as to obtain laser pulses providing with a limited Rydberg hopping.

In the present case, each of the six properties are fulfilled and result in a variation of the amplitude $|\Omega(t)|$ and of the phase $\varphi(t)$ of the laser pulse, which strongly differs from the prior art protocols.

As will be clearer from the experimental section, such measurement circuit 16 succeeds in providing a symmetrical protocol offering similar performance to the $\pi$-$2\pi$-$\pi$ protocol described in Jaksch et al.

This measurement circuit 16 also provides with a faster implementation.

Such advantage is also obtained for other quantum error correction codes implying a stabilizer. Notably, the measurement circuit may be used as a stabilizer of a LDPC code.

## EXPERIMENTAL SECTION

Before explaining the simulation and calculations more deeply, it can be pointed out that figures 7 to 18 illustrate the results of the experiments carried out by the Applicant and further explains the adapted shapes for the laser pulse.

Some brief description of said figures together with remarks are provided hereinafter in this paragraph.

Figure 7 is a schematic representation illustrating that a realistic stabilizer measurement is equivalent to four CZ gates followed by an error channel $\varepsilon_{err}$.

Figure 8 shows the variation of amplitude and phase with $\Omega$ for the symmetric time-optimal (TO) and no-hopping (NH) protocols.

Figure 9 illustrates laser pulse $\Omega_a(t)$ and $\Omega_d(t)$ applied on the ancilla- and data atom respectively for the simultaneous (SIM) and no-phase (NP) protocols.

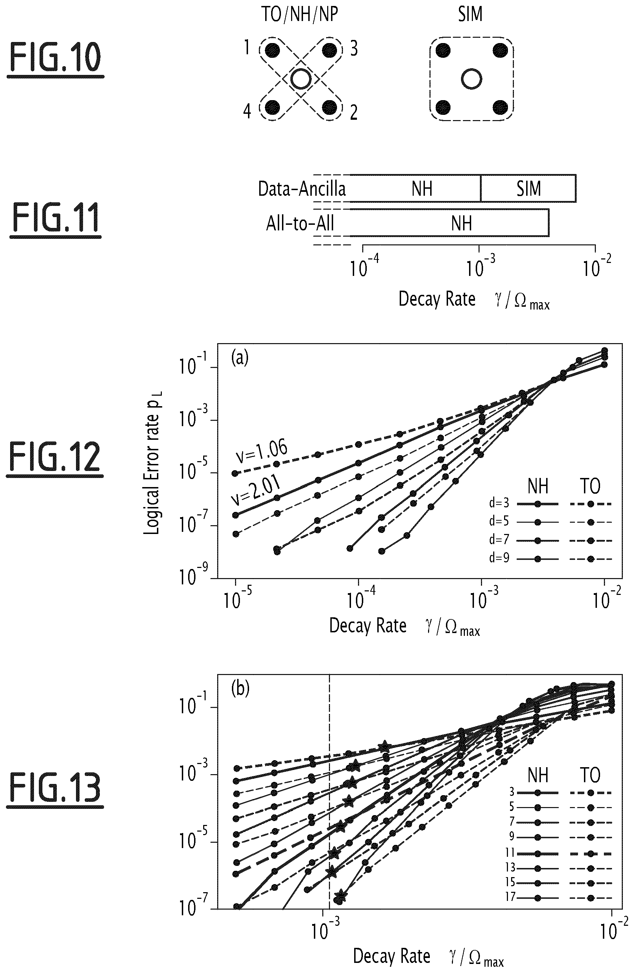

Figure 10 is a schematic representation that, for the TO/NH/NP protocols four CZ gates are applied subsequently in the indicated order whereas, for the SIM protocol, only one global gate is applied on all 5 atoms simultaneously.

Figure 11 corresponds to a summary of which protocol has the lowest logical error rate as a function of $\gamma$ in the limit $d \to \infty$.

Figure 12 is a graph showing logical error rate $p_L$ as a function of the decay rate $\gamma$ (in units of $\Omega_{max}$) for the NH (solid lines) and TO (dashed lines) protocols.

Figure 13 is a graph illustrating logical error rate for the NH (solid lines) and SIM (dashed lines) protocol. Black stars show the crossover points between these two protocols. The gray dashed line shows the asymptotic crossing point: $\gamma_\times = 1.1 \times 10^{-3} \, \Omega_{max}$ in the limit $d \to \infty$.

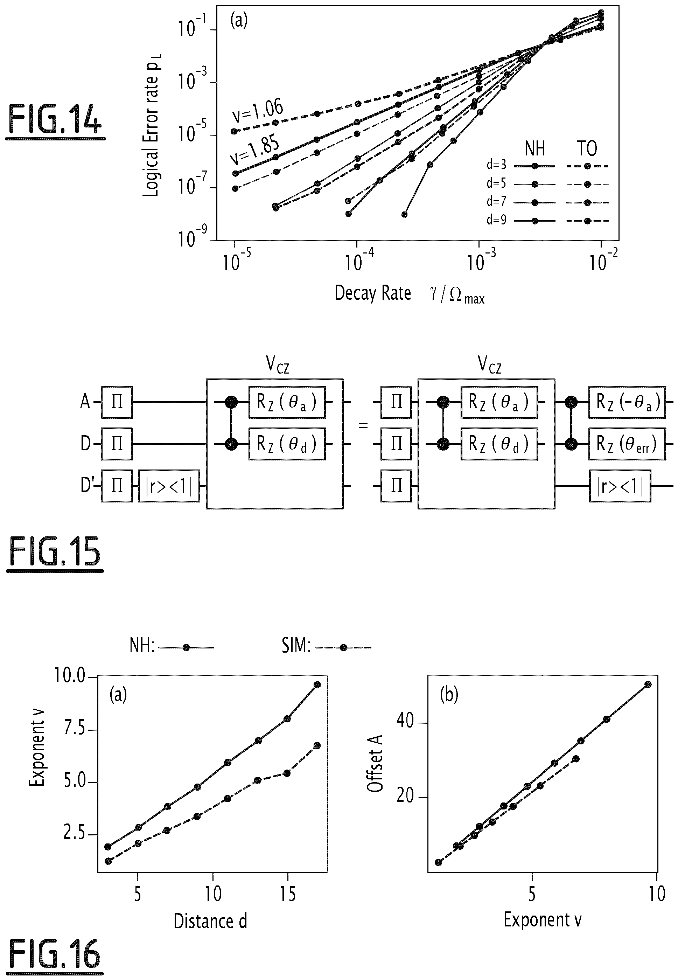

Figure 14 represents logical error rate $p_L$ as a function of the decay rate $\gamma$ (in units of $\Omega_{max}$) for the NP (solid lines) and NH (dashed lines) protocols.

Figure 15 illustrates the propagation of $|r\rangle \langle 1|$ qubit on a spectator qubit by a $V_{CZ}$ gate. $\theta_{err} = -\theta_d$ for the all-to-all blockade and $\theta_{err} = 0$ for the data-ancilla blockade

Figure 16 are two graphs respectively showing exponent $v$ with which $p_L$ increases with $\gamma$ as a function of code distance d for the NH (solid line) and the SIM (dashed line) protocol, offset A for the NH (solid line) and the SIM (dashed line) protocol.

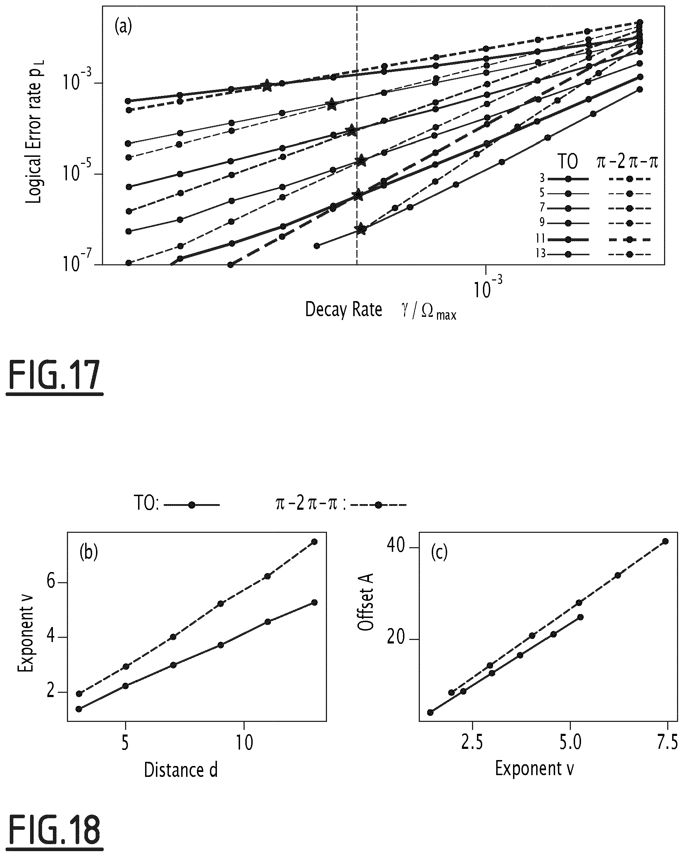

Figure 17 illustrates a comparison of the logical error rate $p_L$ for the TO (solid curve) and the $\pi$-$2\pi$-$\pi$ (dashed curve) protocol. Stars mark the crossover points between the two protocols, the solid dashed line marks the value $\gamma_\times$ for which both protocols give the same $p_L$ in the $d \to \infty$ limit.

Figure 18 are two graphs respectively showing exponent $v$ with which $p_L$ increases with $\gamma$ as a function of code distance d for the TO (solid line) and the $\pi$-$2\pi$-$\pi$ (dashed line) protocol, offset A for the TO (solid line) and the $\pi$-$2\pi$-$\pi$ (dashed line) protocol.

### *Simulations*

In this section, the Applicant considers stabilizer measurements for surface codes with neutral atoms. The Applicant identifies gate protocols that minimize logical error rates in the presence of a fundamental error source in neutral atom quantum computers - spontaneous emission from electronically excited Rydberg states. The Applicant demonstrates that logical error rates are minimized by protocols that prevent the propagation of Rydberg leakage errors and not by protocols that minimize the physical two-qubit error rate. The Applicant provides laser-pulse-level gate protocols to counter these errors. These protocols significantly reduce the logical error rate for implementations of surface codes involving one or two species of atoms. This work demonstrates the importance of optimizing quantum gates for logical errors in addition to gate fidelities and opens the way to the efficient realization of surface codes with neutral atoms. More specifically, the Applicant considers how Rydberg decay, the dominant error sources in many experimental implementations, impacts the error rate of a logical qubit encoded in a surface code. The Applicant discusses two different architectures of neutral atom quantum computers, involving one or two species of stationary atoms as data and ancilla qubits, respectively. For both architectures, the Applicant finds that for small enough Rydberg decay rates $\gamma$ the logical error rate is dominated by Rydberg leakage errors. The latter can cause errors in neighboring qubits during a stabilizer measurement, so that already $\lfloor d/4 \rfloor$ decay events are sufficient to cause a logical error. The Applicant proposes and characterizes pulse-level gate protocols that negate these errors by inhibiting the propagation of Rydberg excitations, so that again $\lfloor d/2 \rfloor$ errors can be corrected and the logical error rate is significantly reduced. Interestingly, these protocols differ significantly from those that minimize the average time that the atoms spend in the Rydberg state and thus the infidelity $1 - \mathcal{F}$ of single two-qubit gates and stabilizer measurement. This work demonstrates the importance of optimizing quantum gates for logical errors in addition to gate fidelities and opens the way to the efficient realization of surface codes with neutral atoms.

The Applicant considers a rotated surface code of distance d made of $2d^2 - 1$ stationary atoms arranged in a square lattice (see figure 1). Stabilizers are given by products of Pauli X or Z operators on four data atoms on the corner of a plaquette, and read out using one ancilla qubit in the center of the plaquette. The Applicant assumes that all stabilizers are measured independently, and stabilizer measurements are only performed simultaneously if they involve disjoint sets of atoms. Let us consider a single Z-stabilizer measurement (X-stabilizer measurements are performed in the same way, with Hadamard gates inserted on all data atoms before/after the measurement): As apparent from figure 6, each one of the five atoms on the plaquette is modeled as a three level system, with computational basis states $|0\rangle$, $|1\rangle$ and Rydberg state $|r\rangle$. The dynamics is governed by a Lindblad master equation:

$$\dot{\rho} = -i[H.\rho] + \sum_{i,q} L_i^{(q)} \rho L_i^{(q)\dagger} - \frac{L_i^{(q)\dagger} L_i^{(q)} \rho}{2}$$

Where:

-

$$L_i^{(q)} = \sqrt{\frac{\gamma}{2}} |q_i\rangle\langle r_i| \text{ for } i \in \{0, ..., 4\} \text{ and } i \in \{0,1\}$$

and

- Hamiltonian H with $\hbar = 1$ is given by equation 1:

$$H = \sum_{i,j=0}^{4} B_{ij} |r_i r_j\rangle\langle r_i r_j| + \sum_{i=0}^{4} \frac{\Omega_i(t)}{2} |r_i\rangle\langle 1_i| + h.c.$$

Here, $B_{ij}$ is the interaction strength between atoms i and j prepared in the Rydberg state $|r\rangle$, $\Omega_i(t)$ is the (complex) time-dependent Rabi frequency of a laser incident on atom i coupling $|1\rangle$ and $|r\rangle$ and $\gamma$ is the decay rate of the Rydberg state, which the Applicant assumes to decay to $|0\rangle$ and 11) with a branching ratio of 1:1. The Applicant considers either $B_{ij} = 0$ or $B_{ij} = \infty$, corresponding, respectively, to the absence of interactions or a perfect Rydberg blockade between atoms i and j, where simultaneous occupation of Rydberg states for atoms i and j is impossible.

To measure a stabilizer, the Applicant follows the circuit shown in figure 6: First, the ancilla atom is prepared in $|+\rangle = \frac{|0\rangle + |1\rangle}{\sqrt{2}}$. Then, laser pulses $\Omega_0$ and $\Omega_1(t)..., \Omega_a(t)$ are applied on the ancilla and the four data atoms, respectively, where the Applicant assumes that for all pulses

$$|\Omega_j(t)| \leq \Omega$$

with $\Omega_{max}$ the maximal achievable Rabi frequency.

The pulses are chosen such that in the decay free case ($\gamma = 0$) a unitary U is implemented which, up to single qubit gates $R_Z(\theta_a) = \exp(i\theta_a |1\rangle\langle 1|)$ and $R_Z(\theta_d)$ on ancilla and data atoms, respectively, corresponds to four controlled-Z (CZ) gates, one between each data atom and the ancilla atom (however, see discussion for the SIM protocol below). For simplicity, the Applicant assumes that all population remaining in the Rydberg state at the end of the pulses is then removed by applying on each atom the channel :

$$\mathcal{D}(\rho) = \Pi\rho\Pi + \langle r|\rho|r\rangle\frac{\Pi}{2}$$

With $\Pi = |0\rangle\langle 0| + |1\rangle\langle 1|$.

This could be realized either by simply waiting long enough for the Rydberg state to decay with high probability, or by coupling the Rydberg state to a short lived intermediate state which decays to $|0\rangle$ and $|1\rangle$. Thus, this model captures the effect of Rydberg leakage errors during one stabilizer measurement, but not between different stabilizer measurements. Finally, single qubit gates are applied on each atom to compensate for the single qubit rotation induced by U, and the ancilla qubit is measured in the X basis. The noisy stabilizer measurement can now be seen as four ideal CZ gates between the ancilla and the data qubits, followed by a 5-qubit error channel $\tilde{\varepsilon}_{err}$ and the measurement of the ancilla qubit (see figure 7).

The Applicant simulates $\tilde{\varepsilon}_{err}$ using a Clifford simulator, by applying randomized compiling and assuming that random Pauli gates P and the Clifford conjugate gates P' are inserted before and after the measurement, respectively. This ensures that $\tilde{\varepsilon}_{err}$ is a Pauli channel, i.e. of the form of equation 2:

$$\tilde{\varepsilon}_{err}(\rho) = \sum_Q \lambda_Q Q_\rho Q$$

Where:

- Q is summed over all 5-qubit Pauli strings and
- $\lambda_Q$ is the probability of Pauli error Q.

The Applicant has noted that omitting P and P' from the measurement circuit while still assuming that $\tilde{\varepsilon}_{err}$ is of the form of equation 2 corresponds to the Pauli twirling approximation. In the following, The Applicant has computed error

probabilities $\lambda_Q$ by solving the Lindblad master equation given by $H$ and $L_i^{(q)}$. The Applicant has then used the stabilizer circuit simulator STIM together with a minimum weight perfect matching decoder to calculate the logical error rate $p_L$ of d rounds of stabilizer measurements using the computed $\lambda_Q$.

In order to exemplify the role of Rydberg leakage errors in the stabilizer measurements, the Applicant first discusses a so-called data-ancilla blockade model, where the Applicant has assumed that for atoms on the same plaquette there is only a Rydberg blockade between the ancilla and all data atoms, but not between two data atoms. This model can be approximately realized in dual species arrays.

The Applicant then discusses the all-to-all blockade model, where the Applicant has assumed a Rydberg blockade between all atoms on a plaquette. This model can be approximately realized in single-species arrays.

In both blockade models, the stabilizer measurement can be realized by applying four subsequent CZ gates, each with the same pulse $\Omega_a(t)$ on the ancilla atom and $\Omega_d(t)$ on the data atom. The gate infidelity under Rydberg decay is minimized if each CZ gate is implemented using a time-optimal (TO) gate, in which the same laser pulse $\Omega(t) = \Omega_a(t) = \Omega_d(t)$ with constant amplitude $\Omega_{max}$ and time dependent phase $\varphi(t)$ is applied symmetrically on both atoms (see figure 8). This implements a $V_{CZ} := CZ[R_Z(\theta_a) \otimes R_Z(\theta_d)]$ gate [where $R_Z(\theta_a)$ acts on the ancilla and $R_Z(\theta_d)$ acts on the data atom, respectively], with $\theta_a = \theta_d = 2.17$.

Figure 12 shows the logical error rate $p_L$ for the TO protocol (dashed lines) for distances between d = 3 and d = 9 in the data-ancilla blockade model. In particular, for d = 3, the Applicant has found that for small enough decay rates $\gamma$ the logical error rate scales as

$$p_L \sim \gamma^{\nu} \text{ with } \nu \approx 1$$

Meaning that already a single decay event can cause a logical error.

This contradicts the expectation that a d = 3 surface code should be able to correct a single decay event.

To understand why the TO protocol performs worse than expected, it is sufficient to consider a single decay event during the first of the four $V_{CZ}$ gates: Due to the fraction of the laser pulse that is applied after the decay event it is possible that the ancilla qubit is found in $|r\rangle$ at the end of the gate. Instead of a Pauli X, Y or Z error this corresponds to a $|r\rangle\langle 1|$ error which occurs right after the first $V_{CZ}$ gate on the ancilla qubit. This latter type of Rydberg error can be detrimental, as $V_{CZ}$ only acts as a CZ gate on the computational subspace, but its action on states outside of the computational subspace depends on the gate protocol. In particular, the Applicant has found that a $|r\rangle\langle 1| \otimes I$ error followed by a $V_{CZ}$ gate is equivalent to a $V_{CZ}$ gate followed by a linear combination of:

- $|r\rangle\langle 1|\otimes I$ error,
- $|r\rangle\langle 1| \otimes Z$ error,
- $I \otimes |r\rangle\langle 1|$ error, and
- $Z \otimes |r\rangle\langle 1|$ error,

with coefficients $c_1$, $c_2$, $c_3$ and $c_4$, respectively (see notably figure 3).

In the calculation section, the coefficients $c_1$ to $c_4$ for a symmetric protocol with $\theta_a = \theta_d = \theta$ in which the same pulse $\Omega(t)$ is applied to both atoms are calculated according to equations 3 and 4:

$$c_{1/2} = \frac{e^{-2i\theta} \mp e^{-3i\theta}sin(\theta)}{2}$$

$$c_{3/4} = \pm \frac{e^{-3i\theta}cos(\theta)}{2}$$

where:

- the - sign is used for $c_1$ and $c_4$, and
- the + sign is used for C2 and $c_3$.

In particular, for the TO protocol, the Applicant has found that all $c_i$ are nonzero and thus all four propagation channels occur with a nonzero amplitude. Hence, a single $|r\rangle\langle 1|$ error after the first $V_{CZ}$ gate can propagate in $3^4$ different ways. Three of those error propagation paths are shown in figure 4, where each of the four rows shows possible errors after each of the four $V_{CZ}$ gates. The Applicant has seen that a single $|1\rangle\langle r|$ error on the ancilla qubit can lead to pairs of Z errors on the data qubits that are aligned horizontally, vertically, or diagonally. As apparent from figure 1, the pair of vertically aligned Z errors is particularly detrimental, since the logical Z operator is oriented vertically and thus only $\lceil d/4 \rceil$ of those errors suffice to make a logical Z error. This is in contrast to independent single qubit errors, where $\lceil d/2 \rceil$ errors are necessary for a logical error. Note that, since also horizontally or diagonally aligned errors can occur, this behavior cannot be fixed by changing the order in which the $V_{CZ}$ gates are applied to the data qubits.

Equations (3) and (4) show however a way in which the spreading of the $|1\rangle\langle r|$ error can be prevented: For $\theta = \pi/2$, the Applicant has obtained $c_1 = -1$, $c_2 = c_3 = c_4 = 0$, so that the $11\rangle\langle r|$ error commutes with the $V_{CZ}$ gate, up to a global phase. Using quantum optimal control methods and the methodology developed in *the article by S. Jandura and G. Pupillo,* entitled "Time-Optimal Two- and Three-Qubit Gates for Rydberg Atoms", Quantum 6, 712 (2022 - Jandura et al. 2022 hereinafter*)*, the Applicant has determined the shortest possible pulse $\Omega_1(t) = \Omega_2(t)$ that implements a $V_{CZ}$ gate with $\theta = \pi/2$ (in reference to figure 8).

Similar to the TO pulse of Jandura et al. 2022, this pulse requires a continuous variation of the laser phase with time only, while the amplitude is kept fixed at $\Omega_{max}$, which is expected to be experimentally advantageous. When applied to the whole plaquette, this continuous pulse forms the basis of the No-Hopping (NH) protocol for stabilizer measurements. Note that in the NH protocol, the time spent in the Rydberg state is increased by less than 10% compared to the TO protocol. The solid lines in figure 12 show the logical error rate for the NH protocol: For large decay rates $\gamma \gtrsim 10^{-3}.\Omega_{max}$ the NH protocol yields essentially the same logical error rates as the TO protocol since both protocols spend a similar time in the Rydberg state.

However, for small decay rates $\gamma \lesssim 10^{-3}.\Omega_{max}$, the NH protocol significantly reduces the logical error rate compared to the TO protocol for all distances d, demonstrating that in this regime the propagation of Rydberg leakage errors becomes the dominant error source. For d = 3, v takes the expected value $v = 2.01 \approx 2$, showing that two decay events are necessary to produce one logical error in the NH protocol.

The Applicant expects that in the currently experimentally accessible region $10^{-4}\Omega_{max} \lesssim \gamma \lesssim 10^{-3}\Omega_{max}$ the logical error rate can then be improved by more than one order of magnitude. Since the exponent v scales linearly with the distance d (see calculation section), even larger improvements are expected for larger distances.

The data-ancilla blockade also allows for a stabilizer measurement protocol in which the four CZ gates are not applied subsequently, but simultaneously, by applying a $\pi$ pulse on the ancilla qubit, followed by a $2\pi$ pulse applied on all data qubits, and a final $\pi$ pulse on the ancilla qubit, as can be seen from figure 9. This is similar to the original proposal by Jaksch et al. for Rydberg blockade gates, though here the $2\pi$-pulse is applied to all qubits. By acting on all qubits simultaneously, this protocol (called SIM protocol from now on) reduces the time spent in the Rydberg state by ~ 40% compared to the NH protocol. Figure 13 shows that for a decay rate $\gamma > \gamma_\times = 1.1 \times 10^{-3}\Omega_{max}$ the SIM protocol also reduces the logical error rate compared to the NH protocol. However, in the SIM protocol a single decay event of the ancilla qubit during the $2\pi$ pulse on the data qubits can lead to any 5-qubit error Q, so that again only $\lceil d/4 \rceil$ decay events are necessary for a logical error (see calculation section). The Applicant has thus found that for $\gamma < \gamma_\times$ the NH protocol achieves the lower logical error rate (see figure 11).

Now the Applicant turns the discussion to the all-to-all blockade model, in which there is also a Rydberg blockade between data qubits on the same plaquette. Figure 14 shows the logical error rate of the NH protocol in this blockade model (dashed lines). Similar to the TO protocol under the data-ancilla blockade, the Applicant has found that in d = 3 surface code with the NH protocol a single decay event can already cause a logical error (v = 1.06 $\approx$ 1).

To understand this phenomenon, the Applicant has considered how a $|r\rangle\langle 1|$ error on a spectator data qubit D', i.e. a qubit not involved in a $V_{CZ}$ gate between the ancilla qubit A and a data qubit D, is propagated by this $V_{CZ}$ gate (see left part of the figure 15). Under the all-to-all blockade model, the $|r\rangle\langle 1|$ error on D' completely prevents the execution of the $V_{CZ}$ gate, leading to :

$$V^{\dagger}_{CZ} = CZ[R_Z(-\theta_a) \otimes R_Z(\theta_{err})]$$

where $\theta_{err} = -\theta_d$.

The Applicant has noted that this is different from the data-ancilla blockade, where a Rydberg excitation of D' still allows D to be excited to the Rydberg state, so that $V_{CZ}$ acts like a single qubit $R_Z(\theta_d)$ gate on D, corresponding to $\theta_{err} = 0$.

A direct calculation (see calculation section) shows that a $|r\rangle\langle 1|$ error on the first data qubit can lead to any combination of Pauli Z errors on data qubits through the propagation described in the left part of figure 15, thus allowing $\lceil d/4 \rceil$ decay events to cause a logical error. The only exception are the cases $\theta_{err} = 0$ and $\theta_{err} = \pi$, in which $\lceil d/2 \rceil$ decay

events are required. Hence, the NH protocol can correct $\lfloor d/2 \rfloor$ errors under the data-ancilla blockade ($\theta_{err} = 0$), but only $\lfloor d/4 \rfloor$ errors under the all-to-all blockade ($\theta_{err} = \pi/2$).

With this understanding of the underlying error mechanism, the Applicant now identifies the fastest possible gate protocol that is able to correct for $\lfloor d/2 \rfloor$ decay events in the all-to-all blockade model.

Such a protocol requires:

i) $\theta_d \in \{0, \pi\}$ and
ii) either $c_1 = 1$, $c_2 = c_3 = c_4 = 0$ or $c_2 = 1$, $c_1 = c_3 = c_4 = 0$,

preventing the propagation of Rydberg leakage errors.

From equations 3 and 4, the Applicant has seen that no symmetric protocol can simultaneously satisfy i) and ii).

Using quantum optimal control methods, the Applicant has then found the shortest asymmetric pulses $\Omega_a(t) \neq \Omega_d(t)$ that satisfy i) and ii). Interestingly, this protocol - which the Applicant calls the No Phase (NP) protocol since the data qubit only accumulates an irrelevant phase $\theta_d = \pi$ - has a rather simple structure, shown in figure 9: On the ancilla qubit, two pulses with amplitude $\Omega_{max}$ and duration $\tau_1 \approx \dfrac{3.57}{\Omega_{max}}$ are applied, where the second pulse has a phase shift of $\pi$ compared to the first pulse, and there is an idle time $T - 2\tau_1$ in between them, where $T \approx 9.20/\Omega_{max}$. On the data qubit the laser pulse is instead always applied with amplitude $\Omega_{max}$, but there are two phase jumps of $\pi$, switching the sign of $\Omega$, at times $\tau_2$ and $T - 2\tau_2$, with $\tau_2 = \dfrac{T - 2\pi/\Omega_{max}}{4}$. Figure 14 shows that the NP protocol (solid lines) indeed achieves significantly lower logical error rates than the NH protocol, and, in the $d = 3$ case, is able to correct for one decay event ($v = 1.85 \approx 2$). The Applicant has noted that also the original $\pi$-$2\pi$-$\pi$ protocol of Jaksch et al. satisfies conditions i) and ii), but has a 30% longer Rydberg time and thus a larger logical error rate than the NP protocol.

In conclusion, the Applicant has established that, due to the propagation of Rydberg leakage errors, gate protocols which minimize the two-qubit gate fidelity do not necessarily achieve the lowest possible logical error rates. For the data-ancilla and all-to-all blockade model, the Applicant identified the relevant error mechanisms and mitigated them by introducing two new protocols for performing stabilizer measurements with Rydberg atoms, which significantly reduce the logical error rate. Interestingly both protocols require breaking the symmetry between ancilla and data atoms, either by an asymmetric blockade model or by an asymmetric laser pulse. While in the numerical results, the Applicant has considered Rydberg decay as the only error source, the Applicant expects that the protocols also mitigate Rydberg leakage errors arising due to other errors sources, such as Rydberg dephasing. The precise effect of other error sources, as well as the effects of the optical traps, which can exert a repulsive force on atoms in the Rydberg state, will be subject to future work. In a broader context, this work demonstrates the necessity to optimize stabilizer measurements on the physical level to achieve the lowest possible logical error rate and points the way towards an efficient realization of surface codes with neutral atoms.

## *Calculations*

### *I. Numerical calculation of error probabilities*

To calculate the error probabilities $\lambda_Q$ in Eq. (2), the Applicant has first numerically integrated the Lindblad master equation given by H and the $L_i^{(q)}$ with the initial condition $\rho(0) = R$ for each 5 qubit Pauli string R, obtaining the result $\mathcal{F}(R) = \rho(T)$, where T is the duration of the laser pulses.

The Applicant has then calculated the error channel $\varepsilon_{err}$, without the application of the Pauli gates used for randomized compiling, as in equation S1:

$$\varepsilon_{err}(R) = U^\dagger \mathcal{D}^{\otimes 5}\big(\mathcal{F}(R)\big)U$$

$\varepsilon_{err}$ can be expressed using its $\chi$ matrix as in equation S2:

$$\varepsilon_{err}(\rho) = \sum_{Q,Q'} \chi_{Q,Q'} Q_\rho Q'$$

where Q and Q' are summed over all 5 qubit Pauli strings. The twirled channel is then given by equation S3:

$$\tilde{\varepsilon}_{err}(\rho) = 4^{-5} \sum_{P} P\varepsilon_{err}(P\rho P)P = \sum_{Q} \lambda_Q Q_\rho Q$$

where $\lambda_Q = \chi_{Q,Q}$.

Now, the Applicant has used the equations S4, namely:

$$tr\big(r\varepsilon_{err}(R)\big) = \sum_{Q,Q'} \chi_{Q,Q'} tr(RQRQ') = \sum_{Q} \lambda_Q tr((RQ)^2) = 2^5 \sum_{R} s(R,Q)\lambda_Q$$

where the second equality follows from $tr(RQRQ') = \pm tr(QQ') = \pm 2^5 \delta_{QQ'}$ and s(R,Q) = 1 if R and Q commute and s(R, Q) = -1 if R and Q anti-commute.

Inverting Eq. (S4) gives the equation S5:

$$\lambda_Q = 4^{-5} \sum_{R} s(R,Q) tr\big(R\varepsilon_{err}(R)\big)$$

so $\lambda_Q$ can be calculated using Eq. (S1).

*li. Decomposition of error probabilities into decay events*

In the following, the Applicant calculates $\lambda_Q$ to first order in $\gamma$. For this, denote by $U(t_1, t_2)$ the evolution operator under H(t) (without Rydberg decay) from time $t = t_1$ to $t = t_2$. Note that U = U(0, T). For an initial density matrix $\rho(0)$, the solution of the Lindblad equation is to first order in $\gamma$ given by equation S6:

$$\rho(T) = U\rho(0)U^\dagger + \sum_{q,i} \int_O^T dt \left[ F_i^{(q)}(t)\rho(0)F_i^{(q)}(t)^\dagger - \frac{\{F_i^{(q)}(t)^\dagger F_i^{(q)}(t), \rho(0)\}}{2} \right]$$

With:

$$F_i^{(q)}(t) = U(t,T)L_i^{(q)}U(0,t)$$

Thus, the error channel $\varepsilon_{err}$ (see Eq. (S1)) is given by equation S7

$$\varepsilon_{err}(\rho) = \rho + \sum_{q,i,k} \int_O^T dt \left[ E_{i,k}^{(q)}(t)\rho(0)E_{i,k}^{(q)}(t)^\dagger - \frac{\{E_{i,k}^{(q)}(t)^\dagger E_{i,k}^{(q)}(t), \rho\}}{2} \right]$$

With:

$$E_{i,k}^{(q)} = U^\dagger \mathcal{D}_k U(t,T)L_i^{(q)}U(0,t)$$

Where the $D_k$ are the Kraus operators of $\mathcal{D}^{\otimes 5}$.

Now every $E_{i,k}^{(q)}(t)$ can be expanded to derive equation S8:

$$E_{i,k}^{(q)}(t) = 2^{-5} \sum_Q tr\left(QE_{i,k}^{(q)}(t)\right)Q$$

where Q is summed over all 5-qubit Pauli strings. From comparing Eq. (S7) with Eq. (S2) one can read off that for $Q \neq I^{\otimes 5}$, the following equation S9 is fulfilled:

$$\lambda_Q = \chi_{Q,Q} = 4^{-5} \sum_{q,i,k} \int_0^T dt \left|tr\left(QE_{i,k}^{(q)}(t)\right)\right|^2$$

The interpretation of Eq. (S9) is that in order to find the error probabilities $\lambda_Q$, at least to first order in $\gamma$, it is sufficient to consider single decay events. Each decay event is associated with a Lindblad operator $L_i^{(q)}$, specifying that qubit i decays from state $|r\rangle$ to state $|q\rangle$, with a time t at which the decay takes place, and with a Kraus operator $D_k$ specifying how the channel $\mathcal{D}^{\otimes 5}$ acts.

The index $k = (k_0, ..., k_4)$ is summed over $\{0, 1, 2\}^5$, and the Kraus operators are given by $D_k = \overline{D}_{k_0} \otimes ... \otimes \overline{D}_{k_4}$ with

$$\overline{D}_0 = \frac{|0\rangle\langle r|}{\sqrt{2}} \ , \ \overline{D}_1 = \frac{|1\rangle\langle r|}{\sqrt{2}}$$ and $\overline{D}_2 = \Pi = |0\rangle\langle 0| + |1\rangle\langle 1|$.

Here, the Applicant shows that for error strings Q with two vertically aligned Z errors on the data qubits and obtains $\lambda_Q = \Theta(\gamma)$ (i.e. $\lambda_Q$ is of order $\gamma$) by considering a single decay event and showing that $tr\left(QE_{i,k}^{(q)}(t)\right) \neq 0$. Since all terms in Eq. (S9) are non-negative, this is indeed sufficient to show that $\lambda_Q = \Theta(\gamma)$.

### III. Propagation of $|r\rangle\langle 1|$ errors under $V_{CZ}$

#### A. Symmetric protocols

In the following one derives Eqs.(3) and (4) from the simulation section. For this, the Applicant has considered a symmetric protocol, i.e. a protocol in which the same pulse $\Omega(t)$ is applied to both atoms. The action of such a pulse can be understood by considering the two two-level systems, which implies equation S10:

$$H_1 = \frac{\Omega(t)}{2}|0r\rangle\langle 01| + h.c.$$

And equation S11:

$$H_2 = \frac{\sqrt{2}\Omega(t)}{2}|W_+\rangle\langle 01| + h.c.$$

Where:

- 
$$\left|W_\pm\right\rangle = \frac{|1r\rangle \pm |r1\rangle}{\sqrt{2}}$$

$V_{CZ}$ can be obtained by integrating the Schrödinger equation with H1 and H2.

The pulse $\Omega(t)$ is chosen such that $V_{CZ}$ acts as $V_{CZ}|01\rangle = e^{i\theta}|01\rangle$ and $V_{CZ}|11\rangle = -e^{2i\theta}|11\rangle$. Since H1 and H2 are traceless it follows that $V_{CZ}$ must have determinant 1 when restricted to the $\{101\rangle, |0r\rangle\}$ or $\{|11\rangle, |W+\rangle\}$ subspaces.

Thus, it follows that $V_{CZ}|0r\rangle = e^{-i\theta}|0r\rangle$ and $V_{CZ}|W+\rangle = -e^{-2i\theta}|W+\rangle$. Additionally, since the same pulse is applied to both atoms but $|W-\rangle$ is antisymmetric under the exchange of the atoms, $|W-\rangle$ is unaffected by the pulse, i.e $V_{CZ}|W-\rangle = |W-\rangle$. Given the evolution of $|W\pm\rangle$ under $V_{CZ}$, the following equations S12 can be considered:

$$V_{CZ}|1r\rangle = \frac{V_{CZ}|W_+\rangle + V_{CZ}|W_+\rangle}{\sqrt{2}} = e^{-i\theta}(i\sin(\theta)|1r\rangle - \cos(\theta)|r1\rangle)$$

and analogously equation S13:

$$V_{CZ}|r1\rangle = e^{-i\theta}(i\sin(\theta)|r1\rangle - \cos(\theta)|1r\rangle)$$

Now the Applicant wants to find an error E such that applying $V_{CZ}$ after a $|r\rangle\langle 1|$ error is equivalent to applying first $V_{CZ}$ and then E, at least under the condition that before the $|r\rangle\langle 1|$ error the space is in the computational subspace. Formally, the Applicant wants to find E fulfilling the following equation S14:

$$V_{CZ}(|r\rangle\langle 1|\otimes I)\Pi^{\otimes 2} = EV_{CZ}\Pi^{\otimes 2}$$

Using that $[V_{CZ}, \Pi^{\otimes 2}] = 0$ and $(|r\rangle\langle 1| \otimes I)\Pi^{\otimes 2} = |r0\rangle\langle 10| + |r1\rangle\langle 11|$, the Applicant obtains equations S15:

$$EV_{CZ}\Pi^{\otimes 2} = V_{CZ}|r0\rangle\langle 01|V_{CZ}^{\dagger} + V_{CZ}|r1\rangle\langle 11|V_{CZ}^{\dagger}$$

Implying that

$$EV_{CZ}\Pi^{\otimes 2} = e^{-2i\theta}|r0\rangle\langle 01| - e^{-3i\theta}[\sin(\theta)|r1\rangle\langle 11| - \cos(\theta)|1r\rangle\langle 11|]$$

Resulting in:

$$EV_{CZ}\Pi^{\otimes 2} = e^{-2i\theta}|r\rangle\Big\langle 1|\otimes\frac{I+Z}{2} - ie^{-3i\theta}\sin(\theta)|r\rangle\Big\langle 1|\otimes\frac{I-Z}{2} + e^{-3i\theta}\frac{I-Z}{2}\otimes\cos(\theta)|r\rangle\langle 1|$$

For $E = c1\,|r\rangle\langle 1|\otimes I + c_2\,|r\rangle\langle 1|\otimes Z + c_3\,I\otimes|r\rangle\langle 1| + c_4 Z\otimes|r\rangle\langle 1|$ Eq. (S14) is indeed satisfied with $c_1, c_2, c_3$ and $c_4$ given by equations (3) and (4).

*B. The $\pi$-$2\pi$-$\pi$ protocol*

For completeness, the Applicant shows here that the $\pi$-$2\pi$-$\pi$ protocol does not spread Rydberg excitation errors. On states outside of the computational subspace, the $\pi$-$2\pi$-$\pi$ protocol acts as follows (the Applicant assumes the first qubit is the ancilla qubit, on which the two $\pi$ pulses are applied, and the second the data qubit, on which the $2\pi$ pulse is applied), leasing to the following equations S16 to S19:

$$V_{CZ}|0r\rangle = -|0r\rangle \quad (S16)$$

$$V_{CZ}|r0\rangle = |r0\rangle \quad (S17)$$

$$V_{CZ}|1r\rangle = -|1r\rangle \quad (S18)$$

$$V_{CZ}|r1\rangle = -|r1\rangle \quad (S19)$$

Thus, one obtains for a $|r\rangle\langle 1|$ error on the ancilla qubit the equation S20:

14

$$V_{CZ}(|r\rangle\langle 1| \otimes I)\Pi^{\otimes 2} = |r0\rangle\langle 10| + |r1\rangle\langle 11| = (|r\rangle\langle 1| \otimes I)V_{CZ}\Pi^{\otimes 2}$$

corresponding to $c_1 = 1$ and $c_2 = c_3 = c_4 = 0$.

*IV. Error analysis for the SIM protocol*

*A. Fit of the logical error rates*

To understand the behavior of the crossing point between the NH and the SIM protocol represented on figure 13, the Applicant has fitted for each distance d the logical error rate as:

$$p_L = e^A \gamma^\upsilon$$

with exponent $\upsilon$ and offset A.

Figure 16 shows a linear relationship $\upsilon = \alpha d$ between $\upsilon$ and d and an affine relationship $A = log(c) - log(\gamma_{th})\upsilon$, so that one obtains equation S21:

$$p_L = c\left(\frac{\gamma}{\gamma_{th}}\right)^{\alpha d}$$

From fitting the curves in figure 16, the Applicant has obtained equations S22 for the NH protocol:

$$\alpha = 0.55 \: / \: \gamma_{th} = 3.9 \times 10^{-3} \: / \: c = 0.036$$

For the SIM protocol, the equations S23 are obtained:

$$\alpha' = 0.38 \: / \: \gamma_{th}' = 6.8 \times 10^{-3} \: / \: c' = 0.044$$

$\alpha' = 0.38 \: / \: \gamma_{th}' = 6.8 \times 10^{-3} \: / \: c' = 0.044$

The crossing point between protocols with different parameters $\gamma_{th}$, c, $\alpha$ and $\gamma_{th}'$, c', $\alpha'$ is then given by equation S24:

$$\gamma_X = \left(\frac{c}{c'}\right)^{\frac{1}{(\alpha'-\alpha)d}} \left(\frac{\gamma_{th}'^{\alpha'}}{\gamma_{th}^{\alpha}}\right)^{\frac{1}{\alpha'-\alpha}}$$

Which, as d → ∞, converges to:

$$\gamma_{th}'^{\frac{\alpha'}{\alpha'-\alpha}} \gamma_{th}^{\frac{\alpha}{\alpha'-\alpha}} = \frac{1.1 x 10^{-3}}{\Omega_{max}}$$

This asymptotic crossing decay rate is shown by the gray dashed line in figure 13.

*B. Analytical Discussion*

In the following, the Applicant shows that, for the SIM protocol, $\lambda_Q = \Theta(\gamma)$ for all 5-qubit Pauli errors $Q \neq I^{\otimes 5}$, i.e. that just one decay event can cause any Pauli error Q on all 5 qubits on the plaquette.

To show this it is sufficient to consider the decay of the ancilla qubit (i = 0) at t = $2\pi/\Omega_{max}$, i.e. exactly in the middle of the $2\pi$ pulse applied on the data qubits. Below the Applicant shows that for any error Q there exist q and k such that

$$tr\left(QE_{i,k}^{(q)}(t)\right) \neq 0$$

. Together with Eq. (S9) this establishes $\lambda_Q = \Theta(\gamma)$.

Consider an initial state $|a, d_1, d_2, d_3, d_4\rangle$ of the ancilla and the data qubits, with a, $d_1, ..., d_4 \in \{0, 1\}$. Until the decay event, the evolution is given by equations S25:

$$U(0,t)|a, d_1, ..., d_4\rangle = \begin{cases} if\, a = 0: (-i)^{d_1+\cdots+d_4}|0, d_1, ..., d_4\rangle \\ if\, a = 1: -i|r, d_1, ..., d_4\rangle \end{cases}$$

where for $x \in \{0, 1\}$ one defines $x = 0$ if $x = 0$ and $x = r$ if $x = 1$. After the decay, i.e. after applying $L_0^{(q)}$ the state is the state of equation S26:

$$L_0^{(q)} U(0,t)|a, d_1, ..., d_4\rangle = -i\delta_{a,1}|q, d_1, ..., d_4\rangle$$

where $\delta_{a,1} = 1$ if a = 1 and $\delta_{a,1} = 0$ if a = 0. Finally, the Applicant obtains $F_0^{(q)}$ expressed as follows in equations S27 et S28

$$F_0^{(1)}|a, 0, ...,0\rangle = -\delta_{a,1}|r, 0, ...,0\rangle$$

and

$$F_0^{(q)}|a, d_1, ..., d_4\rangle = -i\delta_{a,1}(-i)^{d_1+\cdots+,d_4}|q, d_1, ..., d_4\rangle$$

if q = 0 or (d1, ..., d4) ≠ (0, ..., 0).

Now let $Q = Q_0 \otimes ... \& Q_4$ be a Pauli error. It can be chosen $k_0 = 2$, for j = 1, ..., 4 and $k_j = 0$ if $Q_j \in \{X, Y\}$ and $k_j = 1$ if $Q_j \in \{I, Z\}$, and q = 0 if $Q_0 \in \{X, Y\}$ and q = 1 if $Q_0 \in \{I, Z\}$. Then, one obtains equation S29:

$$\mathcal{D}_k F_0^{(q)}|a, d_1, ..., d_4\rangle = (-i)^5 \delta_{a,1} \delta_{d_1,1} ... \delta_{d_4,1}|q, k, ..., k_4\rangle$$

from which derives equation S30:

$$E_{0,k}^{(q)}|a, d_1, ..., d_4\rangle = (-i)^5 \delta_{a,1} \delta_{d_1,1} ... \delta_{d_4,1}|q, k, ..., k_4\rangle$$

Hence, one finds equation S31:

$$tr\left(Q E_{0,k}^{(q)}\right) = -(-i)^5 \langle 1, ...,1|Q|q, k, ..., k_4\rangle$$

which is nonzero by the choice of q and $k_1, ..., k_4$.

*V. Propagation of a $|r\rangle\langle 1|$ error on a spectator qubit under all-to-all blockade*

In the following, the Applicant shows that a $|r\rangle\langle 1|$ error on the first data qubit after the first CZ gate can cause any Pauli-Error $Q = Q_0 \otimes ... \& Q_4$ with $Q_j \in \{I, Z\}$ on the 5 qubits of the plaquette by the error propagation shown in the right part of figure 15. The only exceptions are the cases $\theta_{err} = 0$ and $\theta_{err} = \pi$, for which only errors with $Q_2 = Q_3 = Q_4$ are possible, so that up to $\lfloor d/2 \rfloor$ decay events can be corrected.

By propagating through the three subsequent $V_{CZ}$ gates, the $|1\rangle\langle r|$ error on the first data qubit causes an error, as follows from equation S32:

$$E = (|r\rangle\langle 1|)_1 CZ^{(0,2)} CZ^{(0,3)} CZ^{(0,4)} E_{sq}$$

Where:

- $(|r\rangle\langle 1|)_1$ denotes a $|r\rangle\langle 1|$ error on qubit 1,
- $CZ^{(i,j)}$ denotes a CZ gate between qubits i and j and
- $E_{sq}$ is expressed as follows in equation S33:

$$E_{sq} = R_Z(-3\theta_d)\otimes I \otimes R_Z(\theta_{err})^{\otimes 3}$$

The error E can cause a Pauli error Q if there is a Kraus operator D of the channel $D^{\otimes 5}$ such that $\text{tr}(DEQ) \neq 0$. The Applicant now only considers $D = \Pi \otimes 11)\langle r| \otimes \Pi^{\otimes 3}$ and Pauli errors of the form $Q = Z^{z0} \otimes ... \otimes Z^{z4}$. One obtains for a, $d_1, ...,$ $d_4 \in \{0, 1\}$ the relation of equation S34:

$$DE|a, d_1, ..., d_4\rangle = \delta_{d_1,1}e^{i\alpha}|q, k, ..., k_4\rangle$$

Where $\alpha$ fulfills the equation S35:

$$\alpha = \pi a(d_2 + d_3 + d_4) - 3\theta_d a + \theta_{err}(d_2 + d_3 + d_4)$$

With that, equation S36 is obtained:

$$\text{tr}(DEQ) = (-1)^{z_1} \sum_{\alpha=0}^{1} e^{ia(\pi z_0 - 3\theta_d)} \sum_{d_2,d_3,d_4=0}^{1} e^{i\beta}$$

Where $\beta$ fulfills the equation S37:

$$\beta = \sum_{j=2}^{4}[\pi(z_j + a) + \theta_{err}]d$$

One now derives equation S38:

$$\sum_{d_2,d_3,d_4=0}^{1} e^{i\beta} = \prod_{i=2}^{4}\sum_{d=0}^{1} e^{i[\pi(z_j+a)+\theta_{err}]d}$$

The sum $\sum_{d=0}^{1} exp\{i[\pi(z_j + a) + \theta_{err}]d\}$ vanishes if and only if, for some integer k:

$$\pi(z_j + a) + \theta_{err} = (2k + 1)\pi.$$

Since $z_j$, a $\in \{0, 1\}$, this is only possible if $\theta_{err} \in \{0, \pi\}$.

This establishes that for $\theta_{err} \notin \{0, \pi\}$ indeed every error $Q = Z^{z0} \otimes Z^{z4}$ is possible. In contrast, if $\theta_{err} \in \{0, \pi\}$, then $\sum_{d=0}^{1} exp\{i[\pi(z_j + a) + \theta_{err}]d\}$ only doesn't vanish for $z_j$ = a (for $\theta_{err}$ = 0) or $z_j$ = a$\otimes$1 (for $\theta_{err}$ = $\pi$), where $\otimes$ denotes addition modulo 2. In either case, it follows that for $\text{tr}(DEQ) \neq 0$ it is required that $z_2 = z_s = z_4$.

*Vi. Comparison between to and $\pi$-2$\pi$-$\pi$ gate under all-to-all blockade*

In the following, the Applicant compares the TO and the $\pi$-2$\pi$-$\pi$ protocols, two of the most popular protocols in experimental implementations, under the all-to-all blockade. As discussed in the simulation section, the TO protocol is only

able to correct $\lfloor d/4 \rfloor$ decay events, while the $\pi$-$2\pi$-$\pi$ can correct $\lfloor d/2 \rfloor$ decay events. However, the TO protocol has an almost 50% smaller Rydberg time than the $\pi$-$2\pi$-$\pi$ protocol.

Figure 17 shows the logical error rate under the data-ancilla blockade for the TO and the $\pi$-$2\pi$-$\pi$ protocol for distances between d = 3 and d = 13 and $10^{-4} \leq \gamma/\Omega_{max} \leq 2 \times 10^{-3}$. For large decay rates $\gamma$ the TO protocol has the lower logical error rate, due to the smaller Rydberg time. However, for small decay rates $\gamma$ the $\pi$-$2\pi$-$\pi$ protocol has the lower logical error rate, due to its ability to correct $\lfloor d/2 \rfloor$ decay events. The black stars mark the points where both protocols have the same logical error rates. With increasing distance d the crossing point moves to larger decay rates $\gamma$, but converges to a finite values as d $\rightarrow \infty$.

To determine the crossing point $\gamma_\times$ the Applicant has proceeded analogously to Sec IV A and fit a linear relationship v = $\alpha d$ between v and d (see left part of figure 18) and an affine relationship $A = log(c) - log(\gamma_{th})v$ between A and v (see figure 17).

From the fits in figure 18, the Applicant has extracted the relation of equations S39:

- $\alpha = 0.41 / \gamma_{th} = 4.5 \times 10^{-3} / c = 0.038$ for the TO protocol, and
- $\alpha' = 0.58 / \gamma_{th}' = 2.5 \times 10^{-3} / c' = 0.038$ for the $\pi$-$2\pi$-$\pi$ protocol.

This gives an asymptotic crossing point as d $\rightarrow \infty$

$$\gamma'_{th}{}^{\frac{\alpha'}{\alpha'-\alpha}} \gamma_{th}{}^{\frac{\alpha}{\alpha'-\alpha}} = \frac{5.6x10^{-3}}{\Omega_{max}}$$

comparable to current experimental error rates $10^{-4}\Omega_{max} \lesssim \gamma \lesssim 10^{-4}\Omega_{max}$.

## Claims

1. Measurement circuit (16) of a stabilizer (14) of a quantum error correction code for logical qubits, each logical qubit comprising one or several qubits (12) being encoded in neutral atoms with interactions mediated by Rydberg states, the stabilizer (14) being measured on one ancilla qubit and several data qubits, the measurement circuit (16) comprising, for each data qubit, a device (18) comprising a coupling unit (20) adapted to apply a laser pulse symmetrically on both the data qubit and the ancilla qubit, the laser pulse having an amplitude and a phase chosen to have a probability of occurrence of the Rydberg hopping inferior to 0.4 when both qubits are excited by said laser pulse.

2. Measurement circuit according to claim 1, wherein the amplitude and the phase of the laser pulse are chosen to have a probability of occurrence of the Rydberg hopping inferior to 0.1 when both qubits are excited by said laser pulse.

3. Measurement circuit according to claim 1 or 2, wherein the value of the derivative of the phase of said laser pulse with time at the beginning is different from 0.

4. Measurement circuit according to any one of claims 1 to 3, wherein the difference between a maximum value of the phase of said laser pulse and an initial value of the phase of said laser pulse is superior to 3 rad.

5. Measurement circuit according to any one of claims 1 to 4, wherein the phase of said laser pulse has two extremum values different from an initial value of the phase.

6. Measurement circuit according to claim 5, wherein the phase of said laser pulse has two extremum values, both extremum values being strictly superior to an initial value of the phase.

7. Measurement circuit according to any one of claims 1 to 6, wherein the amplitude varies according to a pulse of duration of $\frac{9.50}{\Omega}$, where $\Omega$ is the Rabi frequency of the laser pulse.

8. Measurement circuit according to claim 7, wherein the amplitude varies according to a pulse of duration comprised

between $\dfrac{3\pi}{\Omega}$ and $\dfrac{4\pi}{\Omega}$ where $\Omega$ is the Rabi frequency of the laser pulse.

9. Measurement circuit according to any one of claims 1 to 8, wherein the amplitude and the phase of the laser pulse are chosen to have two of values c1, c2, c3 and c4 equal to 0, with:

$$c_1 = \frac{e^{-2i\theta} - e^{-3i\theta}sin(\theta)}{2}$$

$$c_2 = \frac{e^{-2i\theta} + e^{-3i\theta}sin(\theta)}{2}$$

$$c_3 = \frac{e^{-3i\theta}cos(\theta)}{2}$$

$$c_4 = -\frac{e^{-3i\theta}cos(\theta)}{2}$$

Where $\theta$ is the phase acquired by the state |01> under the laser pulse.

10. Measurement circuit according to claim 9, wherein the amplitude and the phase of the laser pulse are chosen to have three values among the values c1, c2, c3 and c4 equal to 0.

11. Measurement circuit according to claim 10, wherein the amplitude and the phase of the laser pulse are chosen to have

$$\theta = \frac{\pi}{2}$$
.

12. Measurement circuit according to any one of claims 1 to 11, wherein the laser pulse is shaped by a unique acousto-optic modulator to have the desired amplitude and phase.

13. Measurement circuit according to any one of claims 1 to 12, wherein each qubit are encoded in two species of atoms.

14. System implementing a quantum error correction code (10) comprising several measurement circuits (16) according to any one of claims 1 to 13.

FIG.1

FIG.2

FIG.3

FIG.4

FIG.5

Amplitude $|\Omega(t)|$     Phase $\varphi(t)$

Time-Optimal

No Rydberg

Hopping

$\pi - 2\pi - \pi$

FIG.6

FIG.7

FIG.8

FIG.9

FIG.10

FIG.11

FIG.12

FIG.13

## FIG.14

## FIG.15

## FIG.16

FIG.17

FIG.18

|  | Europäisches Patentamt European Patent Office Office européen des brevets | **EUROPEAN SEARCH REPORT** | **Application Number** EP 24 30 5826 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUMIYOSHI KOBAYASHI ET AL: "Erasure-tolerance scheme for the surface codes on Rydberg atomic quantum computers", ARXIV.ORG, CORNELL UNIVERSITY LIBRARY, 201 OLIN LIBRARY CORNELL UNIVERSITY ITHACA, NY 14853, 5 May 2024 (2024-05-05), XP091747302, * the whole document * | 1-14 | INV. G06N10/40 G06N10/70 |
| A | Pupillo Guido ET AL: "Time-Optimal Two-and Three-Qubit Gates for Rydberg Atoms", , 8 May 2022 (2022-05-08), pages 1-30, XP093220545, Retrieved from the Internet: URL:https://arxiv.org/pdf/2202.00903 [retrieved on 2024-11-04] * Abstract, 2. Theoretical tools, 3. Time-optimal gates at infinite blockade strength * | 1-14 | |
| A | JAMES M AUGER ET AL: "A blueprint for fault-tolerant quantum computation with Rydberg atoms", ARXIV.ORG, CORNELL UNIVERSITY LIBRARY, 201 OLIN LIBRARY CORNELL UNIVERSITY ITHACA, NY 14853, 20 July 2017 (2017-07-20), XP081282226, DOI: 10.1103/PHYSREVA.96.052320 * Abstract, II. Quantum computation with Rydberg atoms, III. The surface code, IV. Proposed scheme * -/-- | 1-14 | TECHNICAL FIELDS SEARCHED (IPC) G06N |

The present search report has been drawn up for all claims

| Place of search | Date of completion of the search | Examiner |
|---|---|---|
| The Hague | 6 November 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

page 1 of 2

<table>
<tr><td colspan="2"></td><td></td><td>**Application Number**</td></tr>
<tr><td colspan="2">Europäisches<br>Patentamt<br>European<br>Patent Office<br>Office européen<br>des brevets</td><td>**EUROPEAN SEARCH REPORT**</td><td>**EP 24 30 5826**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEVINE HARRY ET AL: "Parallel Implementation of High-Fidelity Multiqubit Gates with Neutral Atoms", PHYSICAL REVIEW LETTERS, vol. 123, no. 17, 1 October 2019 (2019-10-01), XP093220749, US ISSN: 0031-9007, DOI: 10.1103/PhysRevLett.123.170503 * page 1 - page 4 *<br>----- | 1-14 | |
| A | PAGANO ALICE ET AL: "Error budgeting for a controlled-phase gate with strontium-88 Rydberg atoms", PHYSICAL REVIEW RESEARCH, vol. 4, no. 3, 1 July 2022 (2022-07-01), XP093220750, College Park, US ISSN: 2643-1564, DOI: 10.1103/PhysRevResearch.4.033019 * Abstract, I. Introduction, II. Controlled-phase gate implementation *<br>----- | 1-14 | |
| | | | TECHNICAL FIELDS SEARCHED (IPC) |
| T | SVEN JANDURA ET AL: "Surface Code Stabilizer Measurements for Rydberg Atoms", ARXIV.ORG, CORNELL UNIVERSITY LIBRARY, 201 OLIN LIBRARY CORNELL UNIVERSITY ITHACA, NY 14853, 26 May 2024 (2024-05-26), XP091769035, * the whole document *<br>----- | 1-14 | |

The present search report has been drawn up for all claims

| Place of search | Date of completion of the search | Examiner |
|---|---|---|
| The Hague | 6 November 2024 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. JAKSCH** ; **J. I. CIRAC** ; **P. ZOLLER** ; **S. L. ROLSTON** ; **R. CÔTÉ** ; **M. D. LUKIN**. Fast Quantum Gates for Neutral Atoms. *Physical Review Letters*, 2000, vol. 85, 2208

- **S. JANDURA** ; **G. PUPILLO et al.** Time-Optimal Two- and Three-Qubit Gates for Rydberg Atoms. *Quantum*, 2022, vol. 6, 712